# EUROPÄISCHE PATENTANMELDUNG

(11) **EP 4 108 583 A1**
(43) Veröffentlichungstag der Anmeldung: **28.12.2022**
(21) Anmeldenummer: 22181026.0
(22) Anmeldetag: 24.06.2022
(51) Int. Cl.: B65D 1/32, B65D 41/26, G01F 11/28

(54) **DOSIERVORRICHTUNG UND FLÜSSIGKEITSBEHÄLTER**

(30) Priorität: 25.06.2021 DE 102021116503
(71) Anmelder: Adanalic, Samir, 51429 Bergisch Gladbach (DE)
(72) Erfinder: Adanalic, Samir, 51429 Bergisch Gladbach (DE)
(74) Vertreter: Richly & Ritschel Patentanwälte PartG mbB

(57) **Zusammenfassung**

Die vorliegende Erfindung offenbart einen Flüssigkeitsbehälter (10) zur Bevorratung von flüssigem Haushaltschemieprodukt und ist **dadurch gekennzeichnet,** dass der Flüssigkeitsbehälter (10) entlang einer Längsachse (18) des Flüssigkeitsbehälters (10) zwischen einem expandierten Zustand und einem komprimierten Zustand durch Druckaufbringung reversibel komprimierbar ist, wobei im expandiertem Zustand der Flüssigkeitsbehälter (10) ein erstes Aufnahmevolumen und im komprimierten Zustand ein zweites Aufnahmevolumen aufweist, wobei das zweite Aufnahmevolumen kleiner als das erste Aufnahmevolumen ist.

## Beschreibung

Die vorliegende Erfindung betrifft einen Flüssigkeitsbehälter für flüssige Haushaltschemieprodukte, wie Flüssigwaschmittel oder dergleichen.

Flüssige Haushaltschemieprodukte, wie z.B. Flüssigwaschmittel, Weichspüler, Desinfektionsmittel oder dergleichen, werden im praktischen Gebraucht von Endkunden häufig falsch dosiert. Zwar sind Verschlusskappen bekannt, die ein definiertes Volumen von Flüssigwaschmittel aufnehmen können und grundsätzlich ein korrektes Dosieren ermöglichen. Diese sind jedoch unpraktisch in der Anwendung, da sie bei mehrfacher Benutzung verschmutzen und Reste des Haushaltschemieprodukts beim Wiederverschließen des zugeordneten Flüssigkeitsbehälters entlang einer Außenwandung des Flüssigkeitsbehälters austritt und dort anhaftet.

Dementsprechend dosieren Endkunden vielfach ohne eine Verwendung solcher Dosier- oder Verschlusskappen, was bei den üblicherweise großzügig dimensionierten Auslassquerschnitten derartiger Flüssigkeitsbehälter eine Überdosierung begünstigt. Die Überdosierung schadet sowohl der Umwelt als auch den zu reinigenden Textilien. Weiterhin entstehen auf diese Weise erhöhte Kosten für die Verbraucher.

Ferner sind Dosiervorrichtungen im Verschluss von Flüssigkeitsbehältern (beispielsweise Handwaschseife) bekannt, bei denen durch ein Herunterdrücken des Auslasses ein Pumpvorgang durchgeführt wird, der zu einem Fördern eines definierten Volumens / einer definierten Menge des Haushaltechemieprodukts führt. Entsprechende Dosiervorrichtungen weisen eine Vielzahl von Bauteilen auf und sind somit aufwendig in der Produktion und hinsichtlich deren Dauerstabilität anfällig.

Ausgehend von dem voranstehend beschriebenen Stand der Technik liegt der vorliegenden Erfindung die Aufgabe zugrunde, einen Flüssigkeitsbehälter für flüssige Haushaltschemieprodukte, wie Flüssigwaschmittel oder dergleichen, bereitzustellen, welche die voranstehend beschriebenen Nachteile nicht aufweist und insbesondere ein exaktes Dosieren des Haushaltschemieprodukts bei gleichzeitig einfacher Handhabung ermöglicht.

Diese Aufgabe wird gelöst durch einen Flüssigkeitsbehälter nach Anspruch 1. Vorteilhafte Ausgestaltungen der Erfindung sind in den abhängigen Ansprüchen und der nachfolgenden Beschreibung beschrieben.

Im Genaueren wird die der vorliegenden Erfindung zugrundeliegende Aufgabe durch einen Flüssigkeitsbehälter zur Bevorratung von flüssigem Haushaltschemieprodukt gelöst, wobei der Flüssigkeitsbehälter entlang einer Längsachse des Flüssigkeitsbehälters zwischen einem expandierten Zustand und einem komprimierten Zustand durch Druckaufbringung reversibel komprimierbar ist, und wobei im expandierten Zustand der Flüssigkeitsbehälter ein erstes Aufnahmevolumen und im komprimierten Zustand ein zweites Aufnahmevolumen aufweist, wobei das zweite Aufnahmevolumen kleiner als das erste Aufnahmevolumen ist.

Der entsprechend ausgebildete Flüssigkeitsbehälter weist den Vorteil auf, dass dieser eine vordefinierte Fördermenge / ein vordefiniertes Fördervolumen aufweist, wobei das Fördervolumen der Differenz zwischen dem ersten Aufnahmevolumen und dem zweiten Aufnahmevolumen entspricht. Gleichzeitig weist der erfindungsgemäße Flüssigkeitsbehälter einen sehr einfachen Aufbau auf, so dass dessen Herstellung vereinfacht möglich ist und der Flüssigkeitsbehälter eine verbesserte Langzeitstabilität aufweist.

Die Längsachse des Flüssigkeitsbehälters erstreckt sich von einem Boden des Flüssigkeitsbehälters bis zu einer Ausgabeöffnung des Flüssigkeitsbehälters.

Der expandierte Zustand kann auch als Normzustand bezeichnet werden. Im expandiertem Zustand weist der Flüssigkeitsbehälter das erste Aufnahmevolumen auf, das auch als nominales Aufnahmevolumen bezeichnet werden kann. Im expandiertem Zustand wirkt mit Ausnahme der Gravitationskraft keine Kraft, insbesondere keine Kompressionskraft auf den Flüssigkeitsbehälter ein.

Die Komprimierung des Flüssigkeitsbehälters vom expandierten Zustand in dessen komprimierten Zustand erfolgt durch Aufbringung von Druck entlang der Längsachse des Flüssigkeitsbehälters. Dies kann beispielsweise bei Aufliegen des Flüssigkeitsbehälters, im genaueren des Bodens des Flüssigkeitsbehälters auf einer Grundlage (z.B. ein Tisch oder dergleichen) durch Herunterdrücken des Flüssigkeitsbehälters in Richtung der Grundlage / des Tisches erfolgen.

Aufgrund der reversiblen Komprimierbarkeit des Flüssigkeitsbehälters kehrt der Flüssigkeitsbehälter nach Beendigung der Druckaufbringung von selber in dessen expandierten Zustand zurück.

Unter einer reversiblen Komprimierbarkeit des Flüssigkeitsbehälters ist eine reproduzierbare und wiederholbare Verformbarkeit des Flüssigkeitsbehälters von dessen expandierten Zustand in dessen komprimierten Zustand und zurück in dessen expandierten Zustand zu verstehen. Dabei weist der Flüssigkeitsbehälter vor der Komprimierung (also vor der Druckaufbringung entlang der Längsachse des Flüssigkeitsbehälters) und nach Beendigung der Druckaufbringung eine identische Form auf. Eine beliebige Verformung eines aus dem Stand der Technik bekannten Flüssigkeitsbehälters bei einer Druckaufbringung entlang der Längsachse des Flüssigkeitsbehälters stellt folglich keine reversible Verformbarkeit im Sinne der Erfindung dar.

Vorzugsweise beträgt die Differenz zwischen dem ersten Aufnahmevolumen und dem zweiten Aufnahmevolumen zumindest 15 ml (Milliliter), weiter vorzugsweise zumindest 30 ml, und nochmals weiter vorzugsweise zumindest 50 ml.

Vorzugsweise ist das zweite Aufnahmevolumen um 0,3% kleiner als das erste Aufnahmevolumen. Beispielsweise beträgt das erste Aufnahmevolumen 10 Liter und das zweite Aufnahmevolumen 9,97 L. Somit würde ein Fördervolumen, das der Differenz zwischen dem ersten Aufnahmevolumen und dem zweiten Aufnahmevolumen entspricht, 30 ml (Milliliter) betragen.

Weiter vorzugsweise ist das zweite Aufnahmevolumen um 0,6% kleiner als das erste Aufnahmevolumen. Beispielsweise beträgt das erste Aufnahmevolumen 5 Liter und das zweite Aufnahmevolumen 4,97 L.

Weiter vorzugsweise ist das zweite Aufnahmevolumen um 1% kleiner als das erste Aufnahmevolumen. Beispielsweise beträgt das erste Aufnahmevolumen 3 Liter und das zweite Aufnahmevolumen 2,97 L.

Weiter vorzugsweise ist das zweite Aufnahmevolumen um 1,5% kleiner als das erste Aufnahmevolumen. Beispielsweise beträgt das erste Aufnahmevolumen 2 Liter und das zweite Aufnahmevolumen 1,97 L.

Weiter vorzugsweise ist das zweite Aufnahmevolumen um 3% kleiner als das erste Aufnahmevolumen. Beispielsweise beträgt das erste Aufnahmevolumen 1 Liter und das zweite Aufnahmevolumen 0,97 L. Vorzugsweise ist der Flüssigkeitsbehälter aus einem thermoplastischem Kunststoff hergestellt.

Vorzugsweise ist der Flüssigkeitsbehälter ein Blasformbauteil. Dies bedeutet, dass der Flüssigkeitsbehälter vorzugsweise mittels eines Blasformprozesses hergestellt ist.

Vorzugsweise ist der Flüssigkeitsbehälter derart ausgebildet, dass eine Wandung des Flüssigkeitsbehälters zumindest abschnittsweise in Form eines Faltenbalgs ausgebildet ist.

Der entsprechend ausgebildete Flüssigkeitsbehälter weist den Vorteil auf, dass eine Komprimierung des Flüssigkeitsbehälters von dessen expandiertem Zustand in dessen komprimierten Zustand vereinfacht ermöglicht ist. Ferner weist der entsprechend ausgebildete Flüssigkeitsbehälter den Vorteil auf, dass nach der Komprimierung des Flüssigkeitsbehälters der Flüssigkeitsbehälter verbessert in dessen expandierten Zustand zurückkehrt. Ferner weist der entsprechend ausgebildete Flüssigkeitsbehälter weist den Vorteil auf, dass das Fördervolumen des Flüssigkeitsbehälters, das der Differenz des ersten Aufnahmevolumens und des zweiten Aufnahmevolumens entspricht, mit einer verbesserten Genauigkeit vorliegt.

Das Merkmal, dass eine Wandung des Flüssigkeitsbehälters zumindest abschnittsweise in Form eines Faltenbalgs ausgebildet ist, lässt sich aus so ausdrücken, dass der Flüssigkeitsbehälter zumindest abschnittsweise in Form eines Faltenbalgs ausgebildet ist.

Aufgrund dieser Ausbildung des Flüssigkeitsbehälters weist die Wandung des Flüssigkeitsbehälters im Bereich des Faltenbalgs entlang der Längsachse des Flüssigkeitsbehälters einen undulierenden Außendurchmesser auf.

Weiter vorzugsweise ist der Flüssigkeitsbehälter derart ausgebildet, dass der Faltenbalg in einem Bodenbereich des Flüssigkeitsbehälters ausgebildet ist.

Der entsprechend ausgebildete Flüssigkeitsbehälter weist den Vorteil auf, dass der Flüssigkeitsbehälter bei dessen Komprimierung eine verbesserte Standsicherheit aufweist.

Vorzugsweise ist der Flüssigkeitsbehälter derart ausgebildet, dass der Flüssigkeitsbehälter eine Dosiervorrichtung aufweist, die eine Förderleitung und eine Dosierkammer aufweist, wobei die Förderleitung zum Fördern des Haushaltschemieprodukts ausgelegt ist, und wobei die Dosierkammer mit der Förderleitung fluidverbunden ist und einen Ausguss zum Ausgießen des Haushaltschemieprodukts aus der Dosierkammer aufweist, wobei die Dosiervorrichtung derart mit einem Auslassstutzen des Flüssigkeitsbehälters verbindbar ist, dass die Förderleitung in einem Aufnahmeraum des Flüssigkeitsbehälters angeordnet ist.

Bei Verbindung der Dosiervorrichtung mit dem Auslassstutzen des Flüssigkeitsbehälters ist diese Verbindung Flüssigkeitsdicht. Demzufolge wird bei einem Überführen des Flüssigkeitsbehälters von dessen expandiertem Zustand in dessen komprimierten Zustand das flüssige Haushaltschemieprodukt in die Förderleitung und über die Förderleitung in die Dosierkammer der Dosiervorrichtung gefördert.

Die Förderleitung ist dazu ausgebildet, in ein Vorratsvolumen eines Flüssigkeitsbehälters eines Flüssigkeitsbehälters einzutauchen.

Die Dosierkammer ist mit der Förderleitung vorzugsweise über zumindest eine Ausgabeöffnung der Förderleitung fluidverbunden.

Die Dosierkammer ist vorzugsweise zum Vordosieren des Haushaltschemieprodukts ausgebildet.

Die Dosiervorrichtung weist vorzugsweise eine Verbindungseinrichtung zum Verbinden mit einem Flüssigkeitsbehälter auf. Die Verbindungseinrichtung ist vorzugweise als Gewinde, weiter vorzugsweise als Innengewinde ausgebildet. Weiter vorzugsweise ist die Verbindungseinrichtung als Bajonettverbindung ausgebildet. Nochmals weiter vorzugsweise ist die Verbindungseinrichtung als Schnappverbindung ausgebildet, die vorzugsweise Rasthaken zum Eingreifen in Rastöffnungen in dem Flüssigkeitsbehälter und/oder Rastöffnungen zum Aufnehmen von an dem Flüssigkeitsbehälter ausgebildeten Rasthaken aufweist.

Weiter vorzugsweise ist der Flüssigkeitsbehälter derart ausgebildet, dass die Dosierkammer mit der Förderleitung über zumindest eine Queröffnung in der Förderleitung, vorzugsweise über zwei einander gegenüberliegende Queröffnungen in der Förderleitung fluidverbunden ist.

Der entsprechend ausgebildete Flüssigkeitsbehälter weist den Vorteil auf, dass bei Förderung des flüssigen Haushaltschemieprodukts in die Dosierkammer durch Überführen des Flüssigkeitsbehälters von dessen expandierten Zustand in dessen komprimierten Zustand das flüssige Haushaltschemieprodukt nicht aus der Dosierkammer herausspritzt. Demzufolge weist der entsprechend ausgebildete Flüssigkeitsbehälter eine verbesserte Bedienfreundlichkeit auf.

Weiter vorzugsweise ist der Flüssigkeitsbehälter derart ausgebildet, dass die Dosiervorrichtung mit dem Auslassstutzen mittels einer formschlüssigen Verbindung verbunden ist.

Die formschlüssige Verbindung der Dosiervorrichtung und des Auslassstutzens ist vorzugsweise als Schraubverbindung oder als Bajonettverbindung oder als Rastverbindung ausgebildet. Beispielsweise weist der Auslassstutzen ein Außengewinde und die Dosiervorrichtung ein auf dieses aufschraubbares Innengewinde auf.

Die Dosiervorrichtung ist vorzugsweise lösbar mit dem Auslassstutzen verbunden.

Weiter vorzugsweise ist der Flüssigkeitsbehälter derart ausgebildet, dass die Dosiervorrichtung unlösbar mit dem Auslassstutzen verbunden ist.

Vorzugsweise ist die Dosiervorrichtung stoffschlüssig mit dem Auslassstutzen verbunden.

Weiter vorzugsweise ist der Flüssigkeitsbehälter derart ausgebildet, dass die Dosiervorrichtung einen Verschluss zum Verschließen des Ausgusses aufweist.

Der entsprechend ausgebildete Flüssigkeitsbehälter weist eine nochmals verbesserte Bedienfreundlichkeit auf.

Der Verschluss ist vorzugsweise als Verschlusskappe und/oder als Verschlussklappe ausgebildet.

Weiter vorzugsweise ist der Flüssigkeitsbehälter derart ausgebildet, dass der Verschluss mittels eines Scharniers, insbesondere mittels eines Filmscharniers mit einer Wandung der Dosiervorrichtung verbunden ist.

Weiter vorzugsweise ist der Flüssigkeitsbehälter derart ausgebildet, dass die Dosiervorrichtung ein in der Förderleitung angeordnetes Rückschlagventil aufweist, das einen Flüssigkeitsstrom von der Förderleitung in die Dosierkammer zulässt und einen Flüssigkeitsstrom von der Dosierkammer in die Förderleitung verhindert.

Der entsprechend ausgebildete Flüssigkeitsbehälter weist eine nochmals verbesserte Bedienfreundlichkeit auf.

Vorzugsweise weist der Flüssigkeitsbehälter neun Markierungen auf, die lösbar mit dem Flüssigkeitsbehälter verbindbar sind, wobei jede der neun Markierungen eine erste Farbe oder eine zweite Farbe oder eine dritte Farbe aufweist.

Die erste Farbe ist vorzugsweise rot. Die zweite Farbe ist vorzugsweise gelb. Die dritte Farbe ist vorzugsweise grün.

Die neuen Markierungen sind vorzugsweise an der Dosiervorrichtung lösbar befestigbar. Weiter vorzugsweise sind die neuen Markierungen lösbar im Bereich einer Skala der Dosiervorrichtung befestigbar.

Die Markierungen sind Indikatoren für eine Wasserhärte und/oder für eine zu waschende Wäschemenge und/oder für einen Verschmutzungsgrad der zu waschenden Wäsche. Durch Anbringung der Markierungen an dem Flüssigkeitsbehälter kann ein Benutzer des Flüssigkeitsbehälters leicht die zu verwendende Dosierung ablesen und mittels des Flüssigkeitsbehälters durch Überführen des Flüssigkeitsbehälters von dessen expandierten Zustand in dessen komprimierten Zustand die richtige Menge von Haushaltschemieprodukt fördern.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine Seitenansicht eines erfindungsgemäßen Flüssigkeitsbehälters;
- Figur 2:: eine Schnittdarstellung des in Figur 1 dargestellten Flüssigkeitsbehälters; und
- Figur 3:: eine perspektivische Darstellung des in Figur 1 dargestellten Flüssigkeitsbehälters von schräg oben.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

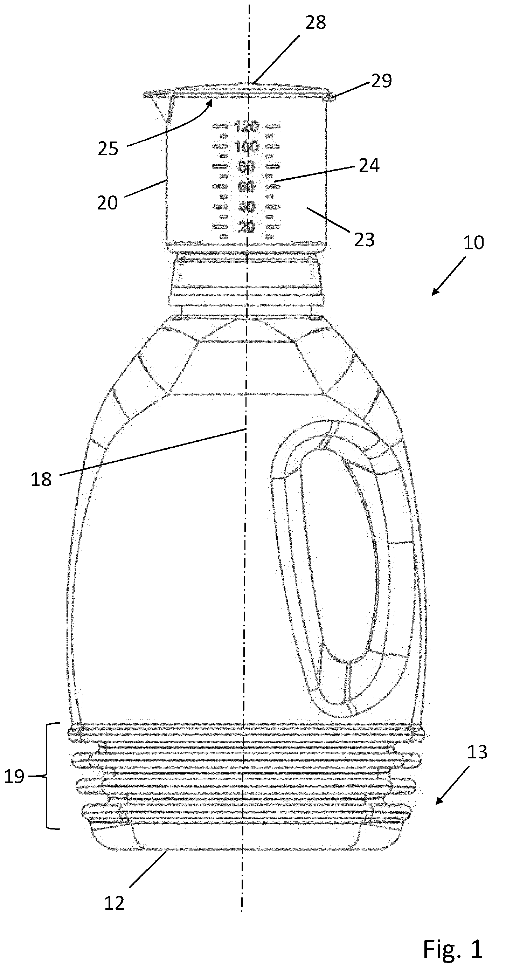

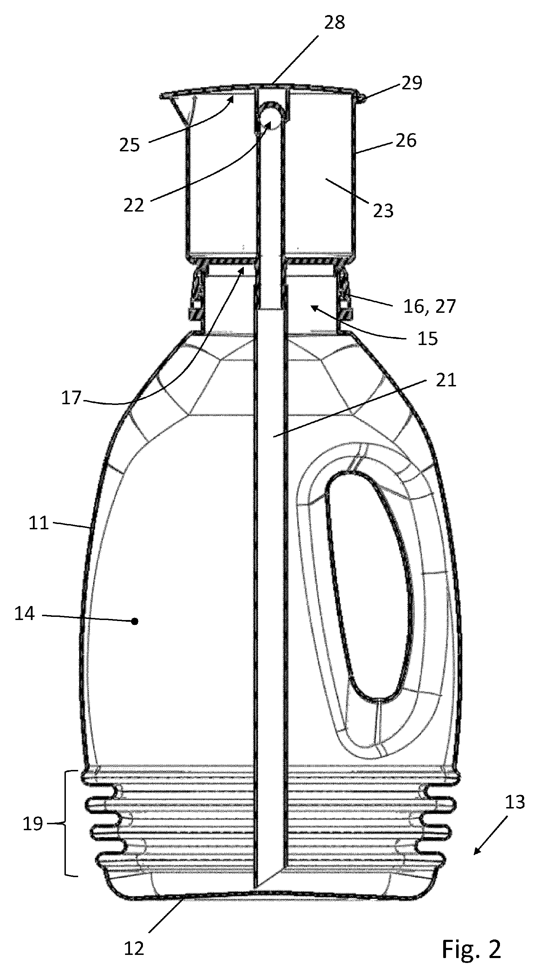

Aus den Figuren 1 bis 3 ist ersichtlich, dass der Flüssigkeitsbehälter 10 einen Aufnahmeraum 14 zur Bevorratung von flüssigem Haushaltschemieprodukt (so wie beispielsweise Flüssigwaschmittel oder dergleichen) aufweist, wobei der Aufnahmeraum 14 von einer Wandung 11 begrenzt ist. Der Flüssigkeitsbehälter 10 ist entlang einer Längsachse 18 des Flüssigkeitsbehälters 10 zwischen einem expandierten Zustand und einem komprimierten Zustand durch Druckaufbringung reversibel komprimierbar. Die Längsachse 18 des Flüssigkeitsbehälters 10 erstreckt sich von einem Boden 12 des Flüssigkeitsbehälters 10 bis zu einer Ausgabeöffnung 17 des Flüssigkeitsbehälters 10.

In den Figuren ist stets der expandierte Zustand des Flüssigkeitsbehälters 10 dargestellt. Im expandierten Zustand der Flüssigkeitsbehälter 10 weist dieser ein erstes Aufnahmevolumen und im komprimierten Zustand ein zweites Aufnahmevolumen aufweist, wobei das zweite Aufnahmevolumen kleiner als das erste Aufnahmevolumen ist. Ein Fördervolumen des Flüssigkeitsbehälters 10 entspricht der Differenz zwischen dem ersten Aufnahmevolumen und dem zweiten Aufnahmevolumen.

Die Wandung 11 des Flüssigkeitsbehälters 10 ist zumindest abschnittsweise in Form eines Faltenbalgs 19 ausgebildet. Dabei ist der Faltenbalg 19 in einem Bodenbereich 13 des Flüssigkeitsbehälters 10 ausgebildet. Folglich ist die Wandung 11 des Flüssigkeitsbehälters zumindest abschnittsweise in Form eines Faltenbalgs 19 ausgebildet. Aufgrund dieser Ausbildung des Flüssigkeitsbehälters 10 weist die Wandung 11 des Flüssigkeitsbehälters 10 im Bereich des Faltenbalgs 19 entlang der Längsachse 18 des Flüssigkeitsbehälters 10 einen undulierenden Außendurchmesser auf.

Die Komprimierung des Flüssigkeitsbehälters 10 vom expandierten Zustand in dessen komprimierten Zustand erfolgt durch Aufbringung von Druck entlang der Längsachse 18 des Flüssigkeitsbehälters 10. Dies kann beispielsweise bei Aufliegen des Flüssigkeitsbehälters 10, im genaueren des Bodens 12 des Flüssigkeitsbehälters 10 auf einer Grundlage (z.B. ein Tisch oder dergleichen) durch Herunterdrücken des Flüssigkeitsbehälters 10 in Richtung der Grundlage / des Tisches erfolgen.

Aufgrund der reversiblen Komprimierbarkeit des Flüssigkeitsbehälters 10 kehrt dieser nach Beendigung der Druckaufbringung von selber in dessen expandierten Zustand zurück.

Der dargestellte Flüssigkeitsbehälter 10 ist aus einem thermoplastischen Kunststoff mittels eines Blasformprozesses hergestellt.

Aus den Figuren ist ersichtlich, dass der Flüssigkeitsbehälter 10 eine Dosiervorrichtung 20 aufweist, die eine Förderleitung 21 und eine Dosierkammer 23 aufweist, wobei die Förderleitung 21 zum Fördern des Haushaltschemieprodukts ausgelegt ist, und wobei die Dosierkammer 23 mit der Förderleitung 21 über zumindest eine in der Förderleitung 21 ausgebildete Queröffnung 22 fluidverbunden ist. Die Dosierkammer 23 weist ferner einen Ausguss zum Ausgießen des Haushaltschemieprodukts aus der Dosierkammer 23 auf. Die Dosiervorrichtung 20 ist mit einem Auslassstutzen 15 des Flüssigkeitsbehälters 10 mittels einer formschlüssigen Verbindung 16,27 verbunden, so dass die Förderleitung 21 in den Aufnahmeraum 14 des Flüssigkeitsbehälters 10 angeordnet ist. Für die formschlüssige Verbindung weist der Auslassstutzen 15 ein Außengewinde 16 und die Dosiervorrichtung 20 weist ein Innengewinde 27 auf. Auch andere formschlüssige Verbindungen sind möglich. Auch ist eine stoffschlüssige Verbindung des Auslassstutzens 15 und der Dosiervorrichtung 20 möglich. Sogar eine einteilige Ausbildung des Auslassstutzens 15 und der Dosiervorrichtung 20 ist möglich.

Bei einem Überführen des Flüssigkeitsbehälters 10 von dessen expandiertem Zustand in dessen komprimierten Zustand wird das flüssige Haushaltschemieprodukt in die Förderleitung 21 und über die Förderleitung 21 in die Dosierkammer 23 der Dosiervorrichtung 20 gefördert.

Die Dosiervorrichtung 20 weist einen Verschluss 28 zum Verschließen des Ausgusses 25 auf. Der Verschluss 28 ist in der dargestellten Ausführungsform als Verschlussklappe 28 ausgebildet, die mittels eines Filmscharniers 29 mit einer Wandung 26 der Dosiervorrichtung 26 verbunden ist.

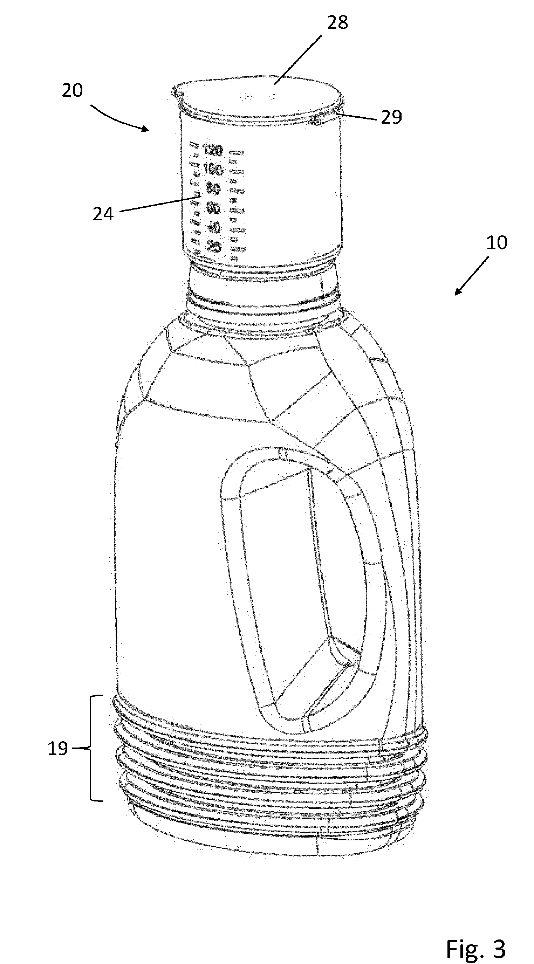

Aus den Figuren 1 und 3 ist ersichtlich, dass die Dosiervorrichtung 20 eine Skala mit Volumenangaben aufweist, so dass die sich in der Dosierkammer 23 befindliche Menge von flüssigem Haushaltschemieprodukt leicht bestimmbar ist.

### Bezugszeichenliste

- 10: Flüssigkeitsbehälter
- 11: Wandung (des Flüssigkeitsbehälters)
- 12: Boden (des Flüssigkeitsbehälters)
- 13: Bodenbereich (des Flüssigkeitsbehälters)
- 14: Aufnahmeraum (des Flüssigkeitsbehälters)
- 15: Auslassstutzen (des Flüssigkeitsbehälters)
- 16: Außengewinde / Formschlussverbindung (des Auslassstutzens)
- 17: Ausgabeöffnung (des Flüssigkeitsbehälters)
- 18: Längsachse (des Flüssigkeitsbehälters)
- 19: Faltenbalg (des Flüssigkeitsbehälters)
- 20: Dosiervorrichtung
- 21: Förderleitung (der Dosiervorrichtung)
- 22: Queröffnung (der Förderleitung)
- 23: Dosierkammer (der Dosiervorrichtung)
- 24: Skala (der Dosierkammer)
- 25: Ausguss (der Dosierkammer)
- 26: Wandung (der Dosierkammer)
- 27: Innengewinde / Formschlussverbindung (der Dosiervorrichtung)
- 28: Verschluss / Verschlussklappe (der Dosiervorrichtung)
- 29: Scharnier / Filmscharnier

## Patentansprüche

1. Flüssigkeitsbehälter (10) zur Bevorratung von flüssigem Haushaltschemieprodukt, **gekennzeichnet durch** die folgenden Merkmale:
- der Flüssigkeitsbehälter (10) ist entlang einer Längsachse (18) des Flüssigkeitsbehälters (10) zwischen einem expandierten Zustand und einem komprimierten Zustand durch Druckaufbringung reversibel komprimierbar; und
- im expandiertem Zustand weist der Flüssigkeitsbehälter (10) ein erstes Aufnahmevolumen und im komprimierten Zustand weist der Flüssigkeitsbehälter (10) ein zweites Aufnahmevolumen auf, wobei das zweite Aufnahmevolumen kleiner als das erste Aufnahmevolumen ist.

2. Flüssigkeitsbehälter (10) nach Anspruch 1, **dadurch gekennzeichnet, dass** eine Wandung (11) des Flüssigkeitsbehälters (10) zumindest abschnittsweise in Form eines Faltenbalgs (19) ausgebildet ist.

3. Flüssigkeitsbehälter (10) nach Anspruch 2, **dadurch gekennzeichnet, dass** der Faltenbalg (19) in einem Bodenbereich (13) des Flüssigkeitsbehälters (10) ausgebildet ist.

4. Flüssigkeitsbehälter (10) nach einem der vorhergehenden Ansprüche, **gekennzeichnet durch** die folgenden Merkmale:
- der Flüssigkeitsbehälter (10) weist eine Dosiervorrichtung (20) auf, die eine Förderleitung (21) und eine Dosierkammer (23) aufweist;
- die Förderleitung (21) ist zum Fördern des Haushaltschemieprodukts ausgelegt;
- die Dosierkammer (23) ist mit der Förderleitung (21) fluidverbunden und weist einen Ausguss (25) zum Ausgießen des Haushaltschemieprodukts aus der Dosierkammer (23) auf;
- die Dosiervorrichtung (20) ist derart mit einem Auslassstutzen (15) des Flüssigkeitsbehälters (10) verbindbar, dass die Förderleitung (21) in einem Aufnahmeraum (14) des Flüssigkeitsbehälters (10) angeordnet ist.

5. Flüssigkeitsbehälter nach Anspruch 4, **dadurch gekennzeichnet, dass** die Dosierkammer (23) mit der Förderleitung (21) über zumindest eine Queröffnung (22) in der Förderleitung (21), vorzugsweise über zwei einander gegenüberliegende Queröffnungen (22) in der Förderleitung (21) fluidverbunden ist.

6. Flüssigkeitsbehälter (10) nach Anspruch 4 oder 5, **dadurch gekennzeichnet, dass** die Dosiervorrichtung (20) mit dem Auslassstutzen (15) mittels einer formschlüssigen Verbindung (16, 27) verbunden ist.

7. Flüssigkeitsbehälter (10) nach einem der Ansprüche 4 bis 6, **dadurch gekennzeichnet, dass** die Dosiervorrichtung (20) unlösbar mit dem Auslassstutzen (15) verbunden ist.

8. Flüssigkeitsbehälter (10) nach einem der Ansprüche 4 bis 7, **dadurch gekennzeichnet, dass** die Dosiervorrichtung (20) einen Verschluss (28) zum Verschließen des Ausgusses (25) aufweist.

9. Flüssigkeitsbehälter (10) nach Anspruch 8, **dadurch gekennzeichnet, dass** der Verschluss (28) mittels eines Scharniers (29 ), insbesondere mittels eines Filmscharniers (29) mit einer Wandung (26) der Dosiervorrichtung (20) verbunden ist.

10. Flüssigkeitsbehälter (10) nach einem der Ansprüche 4 bis 9, **dadurch gekennzeichnet, dass** die Dosiervorrichtung (20) ein in der Förderleitung (21) angeordnetes Rückschlagventil aufweist, das einen Flüssigkeitsstrom von der Förderleitung (21) in die Dosierkammer (23) zulässt und einen Flüssigkeitsstrom von der Dosierkammer (23) in die Förderleitung (21) verhindert.

11. Flüssigkeitsbehälter (10) nach einem der vorhergehenden Ansprüche, **dadurch gekennzeichnet, dass** der Flüssigkeitsbehälter (10) neun Markierungen aufweist, die lösbar mit dem Flüssigkeitsbehälter (10) verbindbar sind, wobei jede der neun Markierungen eine erste Farbe oder eine zweite Farbe oder eine dritte Farbe aufweist.
